# EUROPEAN PATENT APPLICATION

(11) **EP 0 596 742 A1**
(43) Date of publication of application: **11.05.1994**
(21) Application number: 93308834.6
(22) Date of filing: 04.11.1993
(51) Int. Cl.: B23B 27/14

(54) **Abrasive tool insert with high torque fastener**

(30) Priority: 05.11.1992 US 971658
(71) Applicant: GENERAL ELECTRIC COMPANY, Schenectady, NY 12345 (US)
(72) Inventor: Smith, Gary Wayne, Westerville, Ohio 43081 (US)
(74) Representative: Pratt, Richard Wilson

(57) **Abstract**

An abrasive tool insert is provided which incorporates a sleeved (2) bolt (20) as a fastening means which allows for increased torque to be applied in securing the insert to a tool body. The sleeved bolt passes through a hole cut in the tool insert typically formed by an electron discharge machine.

## Description

### Background of the Invention

This invention relates to abrasive tools comprised of superabrasives such as diamond and cubic boron nitride. More particularly, this invention relates to tool inserts comprised of a superabrasive which incorporate means for fastening or securing the insert to the body of the tool.

Abrasive tools comprised of superabrasives come in many configurations and vary also in composition. However, such abrasive tools, including those which utilize inserts, can be separated into two classes: In one class, the superabrasive finds use as an abrasive material in the form of aggregated particles bonded together by a resin or metal matrix. The aggregated particles can form the complete tool, as in the case of a grinding wheel, or only a portion thereof. In the other class of abrasive tools, the superabrasive is in a self-bonded relationship as a polycrystalline mass or cluster. The superabrasive within such a cluster may also be chemically bonded to each other with a sintering aid or bonding medium.

The retention strength of the superabrasive in these tools is much higher than in tools with aggregated particles bonded together with a matrix. Polycrystalline masses of diamond are made by converting graphite particles under high pressure and high temperature. Cubic boron nitride is obtained in a similar manner utilizing the hexagonal form of boron nitride as a starting material. These polycrystalline masses of superabrasive material are often referred to as compacts. Where the compact is supported and bonded to a substrate material, such as cemented tungsten carbide, it is referred to as a composite compact. The bond to the substrate is typically formed under high pressure/high temperature conditions either during or subsequent to formation of the compact. Examples of composite compacts and methods for making the same are found in Re. 32,380 and U.S. Patent Nos.3,743,489; 3,767,371; and 3,918,219.

Compacts which contain residual metal from a catalyst medium, bonding medium, or a sintering aid are thermally sensitive and will experience thermal degradation at elevated temperatures. Compacts which contain self-bonded particles, with substantially no secondary non-abrasive phase, are thermally stable. The "porous" compacts described in U.S. Patent Nos. 4,224,380 and 4,228,248, are polycrystalline and contain some non-diamond phase (less than 3 wt%), yet they are thermally stable. These compacts have pores dispersed therethrough which comprise 5-30% of the compact by volume. The porous compacts are made thermally stable by removal of the metallic phase through liquid zinc extraction, electrolytic depletion, or a similar process.

Primarily due to high cost and equipment limitations, the compacts and composite compacts are limited in size. Because of this size limitation, they are typically used as cutting elements bound to a tool body to form large tools. Where the cutting elements are small in size and surface area, as in the case of those used on saw blades, they may simply be welded or brazed to a tool body and are often referred to as "segments". U.S. Patent No. 4,727,778 (Omi) discloses a method of attaching segments to a body of a cutting tool by sintering and welding. Large-sized cutting elements typically cannot be effectively retained within a tool by welding for the applications intended. In addition, for certain applications, it is desirable to replace a tool's cutting elements when worn. The large-sized cutting elements are typically referred to in the art as "inserts" and are typically held in place under compression by mechanical means. Composite compacts are predominantly used for abrasive inserts because the substrate provides added support to the abrasive, which helps prevent fracture of the abrasive during use.

One method for securing abrasive inserts utilizes a cam-style mechanism.

This mechanism and other conventional means suffer in that they allow lateral movement of the insert during use and variations in the position of the insert. In addition, there are limitations on the torque which can be applied for holding down the insert.

### Summary of the Invention

It is an object of the present invention to provide an abrasive tool insert comprised of superabrasives with fastening means which provides for increased torque in retaining the insert in place without fracturing the abrasive therein.

It is another object of the present invention to provide an abrasive tool insert comprised of superabrasives with fastening means which minimizes lateral movement of the insert and increases positioning repeatability for the insert.

It is yet another object of the present invention to provide an abrasive tool with inserts comprised of a superabrasive composite compact retained in place by a high torque fastener to minimize lateral movement of the abrasive tool inserts.

These and other objects will become apparent from the drawings, detailed description, and claims which follow.

These objects are achieved through the use of an abrasive tool insert which comprises a superabrasive composite compact having a superabrasive layer, a substrate, and a hole which passes through the superabrasive layer and the substrate, and a sleeved bolt positioned in the hole of the superabrasive composite compact. The sleeve extends along the entire length of the hole and has a lip at one end which extends over the surface of the superabrasive layer. In preferred embodiments, this lip extends beyond the head of the bolt.

### Brief Description of the Drawings

Various other objects, features, and attendant advantages of the present invention will be more fully appreciated as the same becomes better understood when considered in conjunction with the accompanying drawings, in which like reference characters designate the same or similar parts throughout the several views and wherein:

Figure 1 is a cross section of an abrasive tool insert of the present invention having one abrasive layer, and

Figure 2 is a cross section of another abrasive tool insert of the present invention having two abrasive layers.

### Detailed Description of the Preferred Embodiments

The tool insert of the present invention comprises a superabrasive composite compact, i.e., a diamond or cubic boron nitride composite compact. These composite compacts can be made by conventional means, and they can be of conventional size. For example, the dimensions for the length and width of the composite component preferably ranges from 0.25'' to 1.25'', most preferably 0.5'' to 1.0''. The corresponding surface area of the composite compacts preferably range from 0.25-1.0 square inches. These compacts comprise at least one abrasive layer chemically bonded to a support. The abrasive layer can comprise superabrasive of large crystal grain size/particle size or small crystal grain size/particle size and those in between. Segmented composite compacts of two or more segments with different-sized particles, such as those described in copending U.S. Patent Application Serial No. 07/943,649, assigned to the same assignee, are also suitable.

Composite compacts of cubic boron nitride suitable for use in this invention can be obtained by converting HBN directly or by converting HBN into CBN particles and bonding these particles with a sintering aid. U.S. Patent No. 2,947,617 describes a method for preparing cubic boron nitride while subjecting the hexagonal form of boron nitride, in the presence of a specific additive material, to very high pressures and temperatures. The added material or catalyst is selected from the class of alkali metals, alkaline earth metals, tin, lead, antimony, and the nitrides of these metals. Composite compacts obtained in the absence of catalyst are also suitable. Such methods are described in U.S. Patent No. 3,212,852. See also Wakatsuki et al., "Synthesis of Polycrystalline Cubic BN (VI)," and Ichinose et al., "Synthesis of Polycrystalline Cubic BN (V)," both in *Proceedings of the Fourth International* *Conference of High Pressure,* Kyoto, Japan (1974), pp. 436-445; U.S. Patent No. 4,016,244; Japanese SHO 49-27518 (Wakatsuki et al.), Japanese SHO 49-30357 (Wakatsuki et al.); Japanese SHO 49-22925 (Wakatsuki et al.); U.S. Patent No. 3,852,078 (Wakatsuki et al.); "Synthesis of Polycrystalline Boron Nitride," *Material Research Bulletin,* Vol. 7, pp. 999-1004 (1972); and GB 1,317,716 (Sirota).

The diamond composite compacts suitable for the present invention can be those obtained by converting graphite directly into diamond by high pressure/high temperature techniques or by two-step procedures, whereby graphite is first converted to diamond, with or without a catalyst, and the resulting diamond particles are bonded in a cluster with the aid of a bonding agent, sintering aid, or residual conversion catalyst. In U.S. Patent Nos. 3,136,615 and 3,233,988, examples of suitable methods for producing diamond compacts or clusters with the aid of a bonding medium or sintering aid are described. Where diamond particles are used, they can be of submicron size to as large as 1000 µm in diameter. Typically, the average particle diameter falls within the range of 0.25 to 200 µm and is preferably in the range of 30 to 150 mesh.

The materials that function as a sintering aid can vary widely. Any metal or ceramic thereof can form the metallic phase. However, preferred materials used as a sintering aid typically include metals recognized as catalysts for converting graphite or HBN into a stronger, more compact state or for forming compact masses thereof and, in addition, include ceramics of such metals, such as the carbides and nitrides of titanium, tantalum, molybdenum, zirconium, vanadium, chromium, and niobium. The amount of material which forms the metallic phase can vary widely and is preferably below 3 wt% to maintain thermal stability. The upper limit on the amount of metallic phase within a particular composite compact is defined by the performance and effectiveness expected of the abrasive tool insert. The presence of any metallic phase is expected to cause some instability at temperatures greater than 700°C in diamond compacts. For example, less than 0.05 mol% of a metallic phase within a diamond composite compact will cause instability under such conditions.

Suitable thermally stable composite compacts include the porous diamond defined in U.S. Patent Nos. 4,224,380 and 4,288,248. The diamond abrasive comprises about 70 to 95 vol% of these porous clusters which comprise diamond particles bonded with a sintering aid to form a network of interconnected empty pores. The porous clusters of bonded diamond particles utilize sintering materials, such as the catalysts described in U.S. Patent Nos. 2,947,609 and 2,947,610, which include Group IIIA metals, chromium, manganese, and tantalum and form a second phase. The porous clusters of bonded diamond particles are not thermally stable until the second phase is removed.

High temperature/high pressure apparatus suitable for forming the composite compacts used to form the inserts of this invention are described in U.S. Patent No. 2,941,248. Suitable devices are typically capable of providing pressures in excess of 100 kilobars and temperatures in excess of 2000°C and can produce both diamond and CBN composite compacts. Common components of the device include a pair of cemented tungsten carbide punches and a diamond of the same material which can withstand extreme temperatures and pressures. U.S. Patent No. 4,188,194 provides a more detailed description of suitable high pressure/high temperature apparatus reaction cells. It will be recognized by those skilled in the art that the reaction cells can be designed to provide multiple chambers. It will also be recognized by those skilled in the art that other devices are capable of providing the required pressures and temperatures for forming the superabrasives composite compacts.

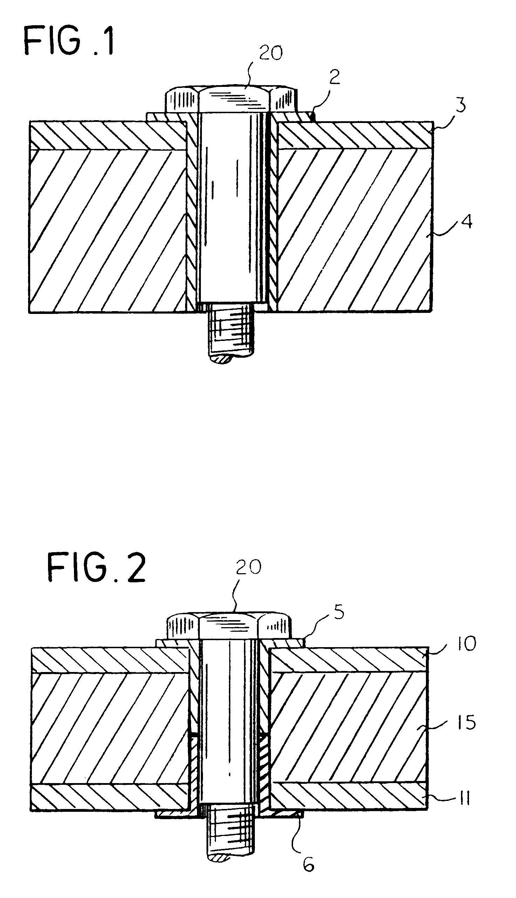

Reaction conditions used to form the composite compacts used in this invention and the duration of the reaction can vary widely with the composition of the starting materials, i.e., graphite/HBN types, and the desired end product. Temperatures and pressures from 1000-2000°C and pressures greater than 10 kilobars, such as from 50-95 kilobars, are typical. The actual conditions in producing diamond composite compacts are dictated by pressure/temperature phase diagrams for carbon, as described in U.S. Patent Nos. 4,188,194; 3,212,852; and 2,947,617. The pressures and temperatures used to form cubic boron nitride composite compacts are within the CBN-stable region defined by the phase diagram of boron nitride. The cubic boron nitride stable region is that represented by Figure 1 of U.S. Patent No. 2,947,617, shown above the equilibrium line on the phase diagram therein.

The superabrasive of a composite compact typically comprises a thin polycrystalline diamond or cubic boron nitride layer, typically greater than 0.030'' and preferably in the range of 0.05''-0.25'', supported on top of a substrate. The superabrasive is chemically bonded to the substrate either by exposing both components to high pressure/high temperature or by forming the superabrasive layer directly on the substrate. The composite compacts utilized in this invention can have one or two layers of superabrasive material positioned therein. The second layer of superabrasive material is typically positioned on the opposing side of a supporting substrate.

Suitable supporting substrates include cemented carbides such as tungsten carbide, titanium carbide, tantalum carbide, and mixtures thereof. Preferably, tungsten carbide is utilized. Typically, any metal which will chemically bond with the superabrasive material is suitable. Those which satisfy this criteria are well known in the art. The substrate for the composite compacts must be sufficiently thick so as to support the superabrasive layer and allow the insert to be firmly secured to the tool body. Preferably, the thicknesses of the substrate ranges from about 0.05'' and greater. Most preferably, the substrate has a thickness which ranges from 0.1'' to 1.0''. The surface area of the substrate typically conforms in size and shape to the surface area of the superabrasive layer.

The superabrasive compact has a hole which passes through the superabrasive layer and the substrate. The diameter of this hole preferably ranges from 1/10'' to 1/2'', most preferably 1/8'' to 1/4''. The size of the hole is determined by compressive retaining force desired in securing the abrasive tool insert to a tool body. Due to the toughness of the superabrasive layer, cutting or abrading the composite compact to obtain this hole may be possible, but it is not preferred. The use of high power lasers is also possible but is not preferred due to the large mass of the support. Although uniformity is difficult to obtain, a hole within the composite compact can be made more easily with an electron discharge machine, wherein the material is essentially vaporized. Whether a laser or EDM is used, the hole is preferably cut in the porous composite compacts described above before leaching the away metallic phase. Such porous composite compacts are not thermally stable and allow for simpler cutting of the hole. Once the hole is cut, the metal phase is leached away to provide a thermally stable composite compact.

The use of a sleeved bolt as a fastener for the tool insert allows for more positive positioning of the tool insert onto the tool body with little lateral movement of the tool insert. This fastening means also provides repeatability in positioning the tool insert. The sleeve extends along the entire length of the hole within the composite compact so as to allow a high level of torque to be applied in securing the insert to the tool body. The sleeve also has a lip at one end which extends over the surface of the superabrasive layer. Preferably, this lip extends over the surface beyond the head of the bolt. This allows for distribution of compressive force applied by the bolt and minimizes the formation of cracks. The sleeve may comprise one or more components and is comprised of a strong metal such as stainless steel, which is preferred. An example of a single-member sleeve is shown in Figure 1. Sleeve 2 has a lip which extends over superabrasive surface 3 supported on substrate 4. An example of a two-member sleeve is shown in Figure 2. Member 5 has a lip which extends over the surface of superabrasive layer 10 and member 6 has a lip which extends over the surface of superabrasive layer 11. Each superabrasive layer is chemically bound to substrate 15.

The fastener also comprises a bolt which also is preferably comprised of steel. However, other materials and alloys are suitable wherein the desired compressive force can be applied to secure the insert on the tool body. The use of the term "bolt" herein is intended to include all threaded fasteners such as screws, threaded studs, shoulder bolts, and the like. Figures 1 and 2 both illustrate a common shoulder bolt 20.

This invention also provides tools which utilize a plurality of abrasive inserts described hereinabove. They include grinding tools, dressers, drill bits, saw blades, and related cutting tools utilized in metal fabrication and also in grinding and cutting hard stone and concrete. These tools retain the abrasive inserts under a high compressive force by tightening the sleeved bolts to a high level of torque (more than 100 ft. lbs.).

The entire disclosure of all applications, patents, and publications, cited herein, are hereby incorporated by reference.

From the foregoing description, one skilled in the art can easily ascertain the essential characteristics of this invention and, without departing from the spirit and scope thereof, can make various changes and modifications of the invention to adapt it to various usages and conditions.

## Claims

1. An abrasive tool insert which comprises:
a superabrasive composite compact having a diamond or cubic boron nitride superabrasive layer, a supporting substrate for the superabrasive layer, and a hole therein which passes through the superabrasive layer and the supporting substrate, and
a sleeved bolt positioned in the hole of the superabrasive composite compact, wherein the sleeve extends along the length of the hole in the superabrasive compact and has a lip which extends over the surface of the superabrasive layer.

2. An abrasive tool insert as in claim 1, wherein the hole within the superabrasive composite compact is formed by an electron discharge machine or laser.

3. An abrasive tool insert as in claim 1 or claim 2, wherein the lip of the sleeve extends beyond the head of the bolt.

4. An abrasive tool insert as in any preceding claim, wherein the sleeve comprises two members.

5. An abrasive tool insert as in claim 4, wherein the superabrasive composite compact has two superabrasive layers positioned on opposing sides of the supporting substrate, and each member of said sleeve has a lip which extends over a superabrasive layer.

6. An abrasive tool insert as in any preceding claim, wherein the superabrasive layer is positioned on a tungsten carbide support and has a thickness in the range of 0.05'' to 0.25'', and the sleeve comprises stainless steel.

7. An abrasive tool insert which comprises a diamond composite compact with a surface area in the range of 0.25-1.0 square inch and a thickness of 0.1'' to 1.00'', said diamond composite compact having at least one diamond layer, a tungsten carbide substrate, and a hole which passes through the diamond layer and tungsten carbide substrate with a diameter in the range of 1/8'' to 1/4'' formed by an electron discharge machine and a sleeved bolt positioned in the hole in the diamond composite compact, wherein said sleeve has an inner diameter equal to the outer diameter of the bolt and a length equal to the length of the hole in the diamond composite compact and a lip which extends over the surface of the diamond layer and beyond the head of the bolt.

8. An abrasive tool insert which comprises a CBN composite compact with a surface area in the range of 0.25-1.0 square inch and a thickness of 0.1'' to 1.00'', said CBN composite compact having at least one CBN layer, a tungsten carbide substrate, and a hole which passes through the CBN layer and tungsten carbide substrate with a diameter in the range of 1/8'' to 1/4'' formed by an electron discharge machine and a sleeved bolt positioned in the hole in the CBN composite compact, wherein said sleeve has an inner diameter equal to the outer diameter of the bolt and a length equal to the length of the hole in the CBN composite compact and a lip which extends over the surface of the diamond CBN and beyond the head of the bolt.

9. A tool which comprises a plurality of inserts, wherein said inserts comprise:
a superabrasive composite compact having a diamond or CBN superabrasive layer, a supporting substrate for the superabrasive layer, and a hole which passes through the superabrasive layer and the supporting substrates, and
a sleeved bolt positioned in the hole of the superabrasive composite compact, wherein said sleeve extends along the length of the hole in the superabrasive composite compact and has a lip which extends over the surface of the superabrasive layer beyond the head of the sleeved bolt.

10. An abrasive tool as in any preceding claim, wherein the abrasive insert is retained under a high compressive force by tightening the sleeved bolts to a level of torque over 100 ft. lbs.
